(19) Europäisches Patentamt

European Patent Office

Office européen des brevets

(11) **EP 1 657 258 A1**

(12) **EUROPEAN PATENT APPLICATION**

(43) Date of publication:
**17.05.2006 Bulletin 2006/20**

(51) Int Cl.:
*C08B 1/00* (2006.01)     *D02G 3/48* (2006.01)

(21) Application number: **05003134.3**

(22) Date of filing: **15.02.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **10.11.2004 KR 2004091201**

(71) Applicant: **Hyosung Corporation**
**431-080 Kyonggi-do (KR)**

(72) Inventors:
• **Kwon, Ik-Hyun**
  **Dongan-ku**
  **Anyang-si**
  **Kyonggi-do, 431-080 (KR)**

• **Choi, Soo-Myung**
  **Dongan-ku**
  **Anyang-si**
  **Kyonggi-do, 431-080 (KR)**
• **Lee, Tae-Jung**
  **Dongan-ku**
  **Anyang-si**
  **Kyonggi-do, 431-080 (KR)**

(74) Representative: **Fuchs Mehler Weiss & Fritzsche**
**Patentanwälte**
**Söhnleinstrasse 8**
**65201 Wiesbaden (DE)**

(54) **A method for producing cellulose fiber**

(57)     There is provided with a cellulose fiber suitable for industrial material which is produced by a process comprising following steps: producing NMMO solution made in a manner to dissolve 0.1wt% to 10 wt% of salt and polyvinyl alcohol in concentrated N-Methyl Morpholine N-oxide (NMMO) in liquid state; producing cellulose solution in a manner that said NMMO solution is mixed with cellulose powder and then said cellulose powder is swelled to produce cellulose solution; obtaining multifilament by solidifying said cellulose solution reached at a coagulation bath through air layer after extruded-sprayed with spraying nozzle having orifices of 500 to 2000; and winding said multifilament for storing after in turn washing, drying and treating with organic solvent, and the cellulose fiber according to the present invention is suitable for industrial materials due to excellent mechanical strength. In addition, it is possible to obtain cellulose fiber by adding salts to concentrated NMMO in liquid state, in which micro-fibril is well oriented in direction of the fiber-axis making cellulose multifilament have excellent mechanical strength and excellent stability of morphology with lower shrinkage at high temperature. Furthermore, the cellulose fiber according to the present invention has a good fibrillation-resistance and excellent adhesion to rubber by using polyvinyl alcohol when used for tire-cord.

EP 1 657 258 A1

**Description**

FIELD OF THE INVENTION

The present invention relates to cellulose fiber having the property of excellent adhesion as well as of high strength, high modulus and low shrinkage, in particular cellulose fiber with excellent strength and modulus and fibrillation-resistance produced in a manner that concentrated N-methyl Morpholine N-oxide (denominated as "NMMO" hereafter) in liquid state is dissolved, together with salt and polyvinyl alcohol to make a solution, and then cellulose powder is dissolved into said solution to be swollen and subsequently the solution with cellulose is sprayed with nozzle with 500 to 2000 orifices.

Cellulose has high affinity with other compounds, but ordinary solvent can not dissolve cellulose owing to crystal structure formed by inter- or intra-molecular hydrogen bonds, therefore for dissolution of cellulose special solvent has to be selected for the structure, and NMMO is used generally for the purpose. The process for manufacturing cellulose fiber with NMMO solvent has some advantage that the process may has no detriment to the environment as all the solvent used in the process may be recovered for recycling and also fiber and film produced using cellulose has high mechanical strength, on this account the cellulose is usually utilized as materials in process for manufacturing wares and many methods for using cellulose has been suggested in many literature starting from US patent no.4,142,913.

US patent no. 4,144,080, no. 4,196,282 and no. 4,246,221 suggest a method for producing cellulose fiber, in which cellulose is swollen into NMMO containing 50wt% of water, and then water is extracted using vacuum distillation to produce spinning-solution which is made into cellulose fiber by extruding.

In addition, US patent no. 4,880,469 describes a method for enhancing the strength of cellulose filament by adding ammonium chloride to NMMO solution. According to the method of '469, cellulose fiber may be obtained by adding ammonium chloride to NMMO solution with pulp having 5000 degrees of polymerization for increasing the property of orientation in direction of axis for micro-fibril, and the resultant has 1.2 Gpa in strength and 5.4 % in shrinkage, but the produced cellulose fiber is not suitable for industrial use due to the fibrillar stripping phenomenon.

A solution for the above problem is suggested in Korean publication no. 1998-700465, and the above invention tells that the fibrillation-resistance, strength and shrinkage of cellulose fibers may be enhanced by adjusting the degrees of polymerization, concentration, the speed of rolling or the tension of filament without adding salt, but the number of filaments per spinning nozzle is just 50, thus the resultant of the above method is not proper for using industrial materials, and also the fibrillation-resistance is deficient for the fibers of industrial material.

Considering the filament for application of the industrial material is generally made as between 1000 and 2000 denier and the industrial material consists of hundreds of filament strands, the cellulose fibers by the above method is not suitable for having physical and chemical properties required for industrial materials after twisting and heat treatment with Resorcinol-Formaldehyde-Latex(RFL) solution. Actually regarding to spinning of fibers, the adjustment of cooling, drying and washing condition is difficult on spinning fine denier rather than rough denier, and so it is not easy to represent physical and chemical properties above some level and to retain uniformity of each filament on the whole, and therefore it is difficult to determine the applicability of fibers as industrial material by checking the properties of fibers for only 50 strands. And because the spinning of air layer varies with process stability for adhesion of the filament discharged from spinning nozzle and the cooling efficiency depending on increase of the number of filament, a new design that considers the outer diameter of spinning nozzle, the diameter of orifice, the length of air layer, the condition for blowing cool air, the flowing direction of coagulation liquid and the condition for water-washing and drying depending on spinning speed is required, and the difference of property results from the design.

SUMMERY OF THE INVENTION

The present invention suggests a solution for the problems of the above inventions, and according to the solution there is provided with cellulose fibers having higher strength of cellulose filament as well as stability of morphology due to lower shrinkage in high temperature by adding concentrated NMMO in liquid state.
Therefore, it is an object of the present invention to provide cellulose fibers avoiding effectively fibrillation and having high adhesion for use of industrial materials by using polyvinyl alcohol.

According to a preferred embodiment of the present invention, a method for producing cellulose fibers comprising the steps of:

(A) producing NMMO solution by dissolving 0.1 to 10 wt% of salt and polyvinyl alcohol into concentrated N-Methyl Morpholine N-oxide (NMMO) in liquid state;
(B) producing cellulose solution by mixing cellulose powder with said NMMO solution, and then by swelling and dissolving;
(C) yielding multi-filaments by discharging said cellulose solution into coagulation bath through air layer after spinning through a nozzle with 500 to 2000 of orifices; and
(D) winding said multi-filaments after water-washing, drying and finishing oil, and the produced multi-filaments is characterized by properties as following:

dried strength 5 to 11 g/d; elongation at break 4 to 12%; dried heat shrinkage -0.5 to 3 %; and modulus 200 to 400 g/d.

In other preferred embodiment, the proportion of salt to polyvinyl alcohol in (A) may be 90 : 10 to 10 : 90.
In another preferred embodiment, said salt in step (A) may comprise divalent anions, such as calcium chloride, ammonium chloride, calcium carbonate, calcium sulfate, sulfate magnesium and sulfate zinc.
In a further preferred embodiment, a extruder is used for mixing said cellulose powder with said NMMO solution, swelling and dissolving the mixed solution, wherein the extruder may be a twin-screw extruder having 8 to 14 barrels and being 24 to 64 in Length/Diameter(L/D) of screw.
In a still further preferred embodiment, index of fibrillation of said cellulose fibers preferably is below 5.
In a still further preferred embodiment, degree of polymerization of polyvinyl alcohol in step (A) may be 500 to 6000.
In a still further preferred embodiment, said cellulose powder in step (B) may be used with other high molecular weight substance mixed.
In a still further preferred embodiment, there is provided with a tire-cord containing said cellulose fibers.

DETAILED DESCRIPTION OF THE INVENTION

The present invention will be described in detail using preferred embodiments in the following, not to limit the scope of the present invention.
Cellulose used in following examples may be granulized micro-particles in size of diameter less than 500 $\mu$m, and preferably 300 $\mu$m using a crusher with knife bars, such as V-81 Pulp available from Buckeye Cooperate, USA. If the size of particle above 500 $\mu$m, then it is difficult to disperse and swell uniformly within the extruder. The core of the present invention is to add salt and polyvinyl alcohol to the concentrated NMMO in liquid state. In such case, the proportion of salt to polyvinyl alcohol is 90: 10 to 10: 90, and preferably 90: 10 to 50: 50. If the proportion of the salt to polyvinyl alcohol is above 90 wt%, then exfoliation of fibril resulting from salt is significant, on the other hand if below 10 wt%, then enhancement of strength resulting from salt is slight. And the total weight of salt and polyvinyl alcohol may be preferably 0.1 to 10 wt% to that of the concentrated NMMO in liquid state. In such case, if the total weight of salt and polyvinyl alcohol is below 0.1 wt%, then salt and polyvinyl alcohol cannot contribute to enhancement of physical properties such as strength, modulus, shrinkage, on the other hand if above 10 wt%, then the viscosity of NMMO solution increases to result in lowering the solubility of cellulose. And also, divalent salts such as calcium chloride, ammonium chloride, calcium carbonate, calcium sulfate, sulfate magnesium and sulfate zinc, and preferably calcium chloride and ammonium chloride may be used to be added to the concentrated NMMO in liquid state. Polyvinyl alcohol used in following examples for adding to the concentrated NMMO in liquid state is in the size of particles less than 500 $\mu$m and as 99.9 % of degree of substitution, and which is available from Peking Organic Chemical Company, and the degree of polymerization of polyvinyl alcohol is 500 to 6000, preferably 1000 to 4000. In such case, if the degree of polymerization is below 500, then polyvinyl alcohol may affect slightly the property of cellulose fibers, and if above 6000, then the solubility of NMMO and cellulose is lowered. In the meanwhile, NMMO solution with 50 wt% concentration may be concentrated in known manner resulting in concentrated NMMO in liquid state with 10 wt% to 20 wt% of moisture contents. If NMMO solution is to be concentrated below 10 wt% of moisture contents, then the cost for concentrating is high, on the other if above 20 wt% of moisture contents, then the solubility is lowered. The concentrated NMMO in liquid state and cellulose powder into which salt and polyvinyl alcohol are dissolved is fed continuously into an extruder sustained at the temperature of 65 to 105 °C, and then NMMO is mixed, swollen and dissolved to produce uniform cellulose solution. The NMMO solution in which salt and polyvinyl alcohol are dissolved in small quantity may be fed by a gear pump or a screw-type feeder into the extruder, and cellulose powder is preferably supplied in to the extruder by a screw-type feeder.
The contents of cellulose powder contained into cellulose solution which is mixed, swollen and dissolved into the extruder amounts 5 wt% to 20 wt%, preferably 9 wt% to 14wt% compared to the weight of liquid NMMO depending on the degree of polymerization. In such case, if the content of cellulose powder is below 5 wt%, the produced cellulose fibers have not the physical property as industrial material, on the other hand if above 20 wt%, it is difficult to dissolve cellulose powder with NMMO solution and thereby the homogenized solution is not easily produced.
And also the extruder which is used for producing the swollen and homogenized solution with addition NMMO in step (B) may preferably be a twin-screw extruder, and the twin-screw extruder may preferably have 8 to 14 of barrels or screws for which the value of length/diameter (L/D) is 24 to 64. If the number of barrels below 8 or the value of L/D is below 24, then the time in which the cellulose solution passes the barrels is too short to swell and dissolve the cellulose powder remaining with a large quantity of the cellulose powder insoluble, on the other hand if the number of barrels above 14 or the value of L/D is above 64, then the cost for manufacturing the extruder is too high to be available commercially and also the screws of the extruder may be overloaded.

The cellulose powder in step (B) may be used with other high molecular compounds or additives mixed. The high molecular compounds may be polyethylene, polyethylene glycol, polymethylmethacrylate and the like, and the additives may be agent for dropping viscosity or $TiO_2$, $SiO_2$, carbon, carbon nano-tube, inorganic nano clay and the like.

Describing more specifically the step (C) corresponding to the spinning process, the spinning solution is spun through the spinning nozzles including a plurality of orifices spaced each other in distance of 0.5 to 5.0 mm in which each orifice is 100 to 300 $\mu$m in diameter and 200 to 2400 $\mu$m in length, and the value of L/D is 2 to 8, and then the spinning solution reach a coagulation bath through air layer to produce multi-filaments after coagulation.

The type of spinning nozzles may be circular in general, and the diameter of nozzle may be 50 to 200 mm, preferably 80 to 150 mm. If the diameter of nozzle below 50 mm, then the distance between the orifices is too short to cool efficiently and thereby adhesion may happen before the discharged solution is solidified, on the other hand the diameter of nozzle is too large, then the peripheral devices such as pack for spinning and nozzle are too big resulting in disadvantage in view of equipment. And also if the diameter of nozzle orifice is below 100 $\mu$m or above 300 $\mu$m, then the spinnability may be generated as broken filaments. If the length of nozzle orifice is below 200 $\mu$m, then the physical property is worse because the orientation of solution is poor, on the other hand if above 2400 $\mu$m, then the cost for manufacturing the nozzle orifice is too high.

The cellulose according to the present invention is suitable for industrial materials, and preferably for the filaments of tire-cord in view of use, and therefore the number of orifices may be 500 to 2000, preferably 700 to 1500.

In a preferred embodiment of the present invention, the spinning nozzle may include orifices as many as mentioned in the above, in which each orifice is subject to the above mentioned conditions. If the number of orifices is below 500, the coagulation and washing processes can not be implemented completely because the fineness of each filament is too high to discharge NMMO. On the other hand if the number of orifices is above 2000, then the number of filaments for spinning in the nozzle is too large to prevent a filament from folding adjacent filament within air layer, and thereby the stability of each filament is reduced after spinning, which cause some problems to be happen in twisting process and heat treatment with RFL solution for using as tire-cord as well as the physical properties of filaments to be degenerated.

When the spinning solution is in course of coagulation in the coagulation bath after passing the air layer, if the diameter of filament is too large, then it is difficult to produce fibers having close and homogenous structure owing to the difference of rate of coagulation between inner and outer part. Therefore, fibers spun with a suitable air layer be keeping may be immersed into the coagulation liquid with more homogenous diameter on spinning the cellulose solution, if the magnitude of discharge is same. An air layer having too short length prevents filaments from increasing the degree of orientation due to increse in the incidence proportion of pores during solidifying the filaments and removing the solvent, while one having too long length makes it difficult to keep the stability of process due to heavy effect of the adhesion of filaments, ambient temperature and humidity.

An air layer may be 10 to 200 mm, and preferably 20 to 100 mm. When the filaments pass through the air layer, cooling air is supplied for avoiding adhesion as coagulation and for increasing permeation-resistance to the coagulation solution, and a sensor may be installed for detecting ambient atmosphere between an inlet of a device for supplying cooling air and filaments to monitor and adjust temperature and humidity. In general the temperature of supplied air may be kept in 5 to 30 °C. If the temperature is below 5 °C, then the solidification of filaments may be accelerated and thereby the high speed spinning is difficult and the expense is too high due to supplying cooling air, on the other hand if above 30 °C, broken filaments may be happen due to lower cooling effect of the discharging solution. Because the content of moisture is an important factor to affect the process of coagulation, the relative humidity within the air layer should be adjusted between RH10 % and RH50 %. More specifically, for enhancing the stability in view of coagulation speed of filaments and melted adhesion on the surface of the spinning nozzle, RH10 % to RH30 % of dried air adjacent the nozzle and RH30% to 50% of wet air adjacent the solidification solution are suitable. The cooling air may be preferably blown horizontally to the side of filaments discharged perpendicularly, and air velocity is advantageously between 0.5 and 10 m/s, and preferably 1 to 7 m/sec for stability. If air velocity is too low, the cooling air is not superior to the condition of other ambient atmosphere adjacent to filaments and thereby the difference of solidification owing to contact of the cooling air on filaments and severance of filaments may be caused resulting in difficulty with manufacture, on the other hand if too high, then the filaments may run the risk of adhesion owing to agitation of the routine of filaments and the spinnability may be impaired owing to the hindrance of homogeneous flow.

The proportion of NMMO solution in the coagulation solution according to the present invention may be between 5 and 40 wt%. If the filament passes through the coagulation bath with the spinning speed above 50 m/min, the solution in the coagulation bath may be agitated heavily owing to the friction between the filaments and the solidifying solution. Because the above phenomenon may impair the stability of process in enhancing the productivity with excellent physical property by the orientation of elongation and increase of spinning speed, it is necessary to minimize the above phenomenon with a design considering the size and shape of the coagulation bath and the magnitude and flow of solution.

In step (D) according to the present invention, the produced filaments are introduced into a washing bath for washing. Because the remove of solvent and orientation are implemented simultaneously when the filaments pass the coagulation bath, it is necessary to keep the temperature and concentration of solution in bath constant. After passing the bath, the filament should be washed in the washing bath. The method for washing may be performed in a known manner.

After being washed, the filaments are dried and treated using finishing oil to be wounded. The processes for drying, finishing oil and winding may be performed in a known manner. The cellulose with high strength may be produced through the above processes.

The multi-filaments in according to the present invention may be a lyocell multi-filaments having the property such as 700 to 3000 in range of total denier, 7.0 to 25.0 kg in load for breaking. The multi-filaments may comprise 500 to 2000 of filaments, and the fineness of each filament is between 0.5 and 4.0denier. And the physical property of the multi-filaments is 5.0 to 11.0g/d in strength; 4.0 to 12 % in elongation; 0.5 to 4.0 % in elongation (elongation at specific load) at 4.5 kg or 6.8 kg of load; 200 to 400 g/d in modulus, 0.0030 to 0.060 in birefringence; -0.5 to 3 % in shrinkage, therefore the multi-filaments of the present invention may be advantageously used as industrial materials, particularly tire-cord for vehicles.

In below the present invention will be described in detail using examples that doesn't limit the scope of the present invention, and in the examples the bases for measuring and estimating physical properties are as followings.

(a) Degree of polymerization (DPw)

The intrinsic viscosity [IV] of the dissolved cellulose was measured using 0.5M cupriethylenediamine hydroxide solution obtained according to ASTM D539-51T in the range of 0.1 to 0.6g/dl of concentration at $25 \pm 0.01°C$ with Uberod viscometer. The intrinsic viscosity was calculated from the specific viscosity using extrapolation method according to the concentration and then the value obtained in the above was substituted into Mark-Houwink's equation to obtain the degree of polymerization.

$$[IV] = 0.98*10^{-2}DP_W^{0.9}.$$

(b) The tenacity (g/d), elongation (%), modulus (g/d) and elongation at specific load (%) of the multi-filaments

The above values were measured immediately after dried with a heat wind dryer for 2 hours at temperature of 107 °C. The measurement was performed with a low-speed elongating tensile tester from Instron LTD., USA and the conditions of measurement are as following:

80 Tpm(80tums twist/m); 250 mm in gauge length; 300 m/mm at speed of elongation.

The modulus may be described as the gradient of load for elongating up to a certain level, and in a tensile test it means gradient on a curve of elongation-load.

An elongation at specific load means elongation at a point of the curve that the load is 4.5 kg (in case of 1500 denier of filament) or 6.8 kg (in case of 2000 denier of filament), and it indicates that less the intermediate elongation is, more large the modulus is and less deformed the filament is.

(c) Heat Shrinkage (%)

A sample for measurement remained for 24 hours, at 25 °C of temperature and 65 %RH, and then the heat shrinkage was measured using the ratio of $L_1$ to $L_0$ wherein $L_1$ was obtained by measuring the length of the sample in 0.05 g of load weight per denier and $L_0$ was measured the sample in 0.05 g of load weight per denier after treating for 30 minutes at 150 °C of temperature with a dryer.

The heat shrinkage is calculated as following:

$$\text{Heat shrinkage (\%)} = [(L_0 - L_1) / L_0] * 100.$$

(d) The estimation of fibrillation

The fibrillation index (F.I.) of cellulose fibers produced in according to the present invention was estimated as following. For generating the fibrillation purposely, 50 multi-filaments in 10 mm of length were input into an Erlenmeyer flask (narrow neck) containing 250 ml of water at 25 °C of temperature and then 10 stainless metal balls with 5 mm of diameter were rotated at 10 rpm for 30 minutes with a magnetic mixer (40 L* 10 mmΦ of magnetic bar), and then the fibrillation index (F.I.) was estimated with an optical microscope after drying.
The samples of multi-filaments were arranged in according to the increase of fibrillation.
The length of base filament was measured from each sample, the number of fibrils was counted, the length of each fibril was measured, the length of average fibril was produced, and then each fiber was allotted a value obtained by multiplying the length of average fibril by the number of fibrils. A fiber having the highest value corresponds to the highest fibril-fiber, and therefore the highest fibril-fiber may be given 10 as fibrillation index and non-fibril fiber may be given 0 as fibrillation for comparing, and thereby the reaming each fiber may given a suitable index according to the degree of fibrillation within 0 to 10. Each sample was given the corresponding index in the above manner.

(e) The force of adhesion

The adhesion with a rubber was estimated using ASTM D4776-98 method based on H-Test. The cellulose filaments were elongated to be made into raw cord, and then the produced raw cord was immersed into RFL solution for use of general cellulose solution, and consequently was treated with heat to produced as dip-cord, and then the produced dip-cord was attached to a rubber for H-test sample, and the force of adhesion was estimated using the H-test sample.

## Example 1

Salt (calcium chloride) and polyvinyl alcohol with 2000 of average DPw were dissolved in NMMO in which the total contents of salt (calcium chloride) and polyvinyl alcohol to NMMO was 2 wt% and the proportion of each salt and polyvinyl alcohol was 90:10, 70:30, 50:50, respectively in each solution.
The NMMO solution containing the above amount of salt and poly vinyl alcohol was fed into a twin-screwed extruder having 78°C of inner temperature at 6900g/h with a gear pump. And then cellulose powder being below 200 $\mu$m diameter and 5% in moisture content was produced using cellulose sheet (V-81 from Buckeye LTD.) with a crusher having 250 $\mu$m-micro-filter, and then the cellulose powder was fed into the extruder with a screwed-supplying device at 853g/h, and then was swollen sufficiently within the extruder using the NMMO solution containing salt and poly vinyl alcohol in swelling area at 8 to 10 minutes of retention time, and in the solution section of the extruder the temperature of each section was kept between 90 and 95 °C, and then the swollen cellulose powder was dissolved to be made into a solution for spinning with the screw operated at 200 rpm, and then the solution was discharged through a nozzle with 1000 orifices with the size of 150 $\mu$m in diameter. The cellulose concentration of the discharged solution was 11 wt%, and the solution was homogeneous with some no dissolved cellulose power remaining and the degree of polymerization was 960. The discharged solution was made into multi-filaments to be wound after coagulation, water-washing, drying and finishing oil, and the fineness of the resultant multi-filaments was adjusted as 1500 denier. The summary of Example 1 is shown as Table 1 in the following.

Table 1

|  | Example 1 | | | Comparison 1 | |
|---|---|---|---|---|---|
|  | 1-1 | 1-2 | 1-3 | 1-1 | 1-2 |
| Content rate of salt : PVA | 90 : 10 | 70 : 30 | 50 : 50 | No use | 100 : 0 |
| Tenacity of filaments (g/d) | 9.0 | 8.5 | 7.9 | 7.5 | 9.1 |
| Elongation at specific load (%) | 0.5 | 0.6 | 0.7 | 10.0 | 0.5 |
| Elongation at Break (%) | 4.5 | 4.9 | 5.3 | 7.0 | 6.4 |
| Modulus (g/d) | 370 | 335 | 310 | 280 | 372 |
| Heat shrinkage (%) | 0.0 | 0.0 | 0.0 | 0.3 | 0.0 |
| Fibrillation index | 1 | 1 | 1 | 1 | 1 |
| Force of adhesion | 14.7 | 14.8 | 15.2 | 13.3 | 13.5 |

### Example 2

Salt (calcium chloride) and polyvinyl alcohol with 2000 degree of polymerization was dissolved in to NMMO solution wherein the proportion of salt and polyvinyl alcohol is 50: 50 by weight and the total contents of salt and polyvinyl alcohol to the NMMO solution were 0.5, 3, 5 and 8 wt%. Hereafter cellulose filaments were produced in similar manner to example 1. The summary of example 2 is shown as Table 2 in the following.

Table 2

|  | Example 2 | | | |
|---|---|---|---|---|
|  | 2-1 | 2-2 | 2-3 | 2-4 |
| Rate of (Salt + PVA) to NMMO solution (wt %) | 0.5 | 3 | 5 | 8 |
| Tenacity of filaments (g/d) | 7.7 | 7.9 | 8.3 | 6.5 |
| Elongation at specific load (%) | 0.7 | 0.7 | 0.6 | 0.7 |
| Elongation at Break (%) | 4.8 | 4.7 | 4.5 | 4.9 |
| Modulus (g/d) | 310 | 310 | 330 | 290 |
| Heat shrinkage (%) | 0.0 | 0.0 | 0.0 | 0.0 |
| Fibrillation index | 1 | 1 | 1 | 1 |
| Force of adhesion | 14.7 | 15.2 | 16.1 | 14.0 |

### Example 3

Compared to example 1, the total contents of salt (calcium chloride) and polyvinyl alcohol was changed into 2 wt% to the NMMO solution, the proportion of salt and polyvinyl alcohol was adjusted as 80: 20, and the number of orifices in the nozzle was replaced with 700, 1000 and 1500, respectively. The fineness of resultant filaments was adjusted as 1500.

The summary of example 3 is shown in Table 3 in the following.

Table 3

|  | Example 3 | | | Comparison 2 | |
|---|---|---|---|---|---|
|  | 3-1 | 3-2 | 3-3 | 2-1 | 2-2 |
| The number of orifices | 700 | 1000 | 1500 | 450 | 2200 |
| Tenacity of filaments (g/d) | 9.0 | 8.5 | 7.9 | 4.5 | 4.1 |
| Elongation at specific load (%) | 0.5 | 0.6 | 0.7 | 2.7 | 3.0 |
| Elongation at Break (%) | 4.5 | 4.6 | 4.7 | 5.5 | 6.0 |
| Modulus (g/d) | 370 | 335 | 310 | 170 | 178 |
| Heat shrinkage (%) | 0.0 | 0.0 | 0.0 | 2.3 | 2.7 |
| Fibrillation index | 1 | 1 | 1 | 7 | 6 |
| Force of adhesion | 14.7 | 14.8 | 15.2 | 11.3 | 13.0 |

### Comparison 1-1

In comparison 1-1 multi-filament was produced in similar to example 1, except using a solution containing no salt and no polyvinyl alcohol, only NMMO.

### Comparison 1-2

In comparison 1-2 multi-filament was produced in similar to example 1, except using a solution containing no polyvinyl alcohol and only salt and NMMO.

**Comparison 2-1**

In comparison 2-1, multi-filament was produced in similar to example 3, except using a nozzle with 450 orifices.

**Comparison 2-2**

In comparison 2-2, multi-filament was produced in similar to example 3, except using a nozzle with 2200 orifices.

In cellulose fibers according to the present invention the micro-fibril of cellulose is made to be orientated to the axis of fibers, and therefore the produced cellulose has excellent stability of morphology at high temperature as well as high strength and modulus, so that the cellulose fibers of the present invention is suitable for use as industrial material, in particular tire-cord. Furthermore, the present invention provides the cellulose fibers having excellent fibrillation-resistance and adhesion with rubber as polyvinyl alcohol is used for preventing the fibrillation happening frequently in cellulose fiber with high strength.

In particular, the present invention can provide cellulose fibers having 700 to 3000 denier of fineness which is required for industrial material, and having advantages such as high strength, high modulus, low shrinkage, fibrillation-resistance and high adhesion with rubber.

While embodiments of the present invention have been described by way of illustration, it will be apparent that this invention may be carried out with many modifications, variations and adaptations without departing from its spirit or exceeding the scope of the claims.

**Claims**

1. Cellulose fibers produced by a method comprising the steps of:

    (A) preparing a NMMO solution by dissolving 0.1 wt% to 10 wt% of salt and polyvinyl alcohol into a concentrated NMMO in liquid state;
    (B) preparing a cellulose solution by mixing a cellulose powder with said NMMO solution, swelling and dissolving the said cellulose powder;
    (C) obtaining a multi-filament by spinning said cellulose solution through a spinning nozzle with 500 to 2000 of orifices, making said cellulose reach a coagulation bath through a air layer and then solidifying said cellulose solution; and
    (D) winding said multi-filament after water-washing, drying and finishing oil; wherein said multi-filament has physical properties as following:
    (1) 700 to 3000 in total denier of the multi-filament, (2) 5 to 11 g/d in dried tenacity, (3) 4 to 12 % in elongation, (4) 0.5 to 4.0 % in elongation at specific load, (5) 200 to 400 g/d in modulus and (6) -0.5 to 3% in shrinkage.

2. The cellulose fibers according to claim 1, **characterized in that** in step (A) the proportion of said salt and polyvinyl alcohol is 90: 10 to 10: 90 by weight.

3. The cellulose fibers according to claim 1, **characterized in that** in step (A) said salt is a bivalent anion such as calcium chloride, ammonium chloride, calcium carbonate, calcium sulfate, sulfate magnesium and sulfate zinc.

4. The cellulose fibers according to claim 1, **characterized in that** in step (B) an extruder is used for mixing said cellulose powder with said NMMO solution, swelling and dissolving said cellulose powder wherein said extruder is a twin-screw extrudes having 8 to 14 of barrels or screw being 24 to 64 in ratio of Length/Diameter (L/D).

5. The cellulose fibers according to claim 1, **characterized in that** the fibrillation index of said cellulose fibers is below 5.

6. The cellulose fibers according to claim 1, **characterized in that** in step (A) the degree of polymerization of said polyvinyl alcohol is 500 to 6000.

7. The cellulose fibers according to claim 1, **characterized in that** in step (B) said cellulose powder is mixed with polyethylene, polyethylene glycol, polymethylmethacrylate and the additives a agent for dropping viscosity or $TiO_2$, $SiO_2$, carbon, carbon nano-tube, inorganic nano clay.

8. A tire-cord comprising said cellulose fibers according to claim 1.

**European Patent Office**

**EUROPEAN SEARCH REPORT**

Application Number

EP 05 00 3134

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 433 881 A (HYOSUNG CORPORATION) 30 June 2004 (2004-06-30) * paragraph [0057] * * claim 1; examples * | 1-8 | C08B1/00 D02G3/48 |
| D,A | US 4 880 469 A (CHANZY ET AL) 14 November 1989 (1989-11-14) * column 1, line 42 - line 29 * * examples * | 1-8 | |
| A | CHANZY H ET AL.: "Spinning of cellulose from N-methyl morpholine N-oxide in the presence of additives" POLYMER, vol. 31, no. 3, March 1990 (1990-03), pages 400-405, XP002370608 * the whole document * | 1-8 | |
| X,P | EP 1 493 850 A (HYOSUNG CORPORATION) 5 January 2005 (2005-01-05) * paragraph [0073] * * claim 1; examples * | 1-8 | TECHNICAL FIELDS SEARCHED (IPC) C08B |
| X,P | EP 1 493 752 A (HYOSUNG CORPORATION) 5 January 2005 (2005-01-05) * claims 11-20 * * paragraph [0046] * * examples * | 1-8 | |

The present search report has been drawn up for all claims

| Place of search | Date of completion of the search | Examiner |
|---|---|---|
| Munich | 6 March 2006 | Vaccaro, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**EP 1 657 258 A1**

| Patent document cited in search report | | Publication date | Patent family member(s) | | | Publication date |
|---|---|---|---|---|---|---|
| EP 1433881 | A | 30-06-2004 | CA | 2438445 | A1 | 26-06-2004 |
| | | | CN | 1511980 | A | 14-07-2004 |
| | | | JP | 2004211277 | A | 29-07-2004 |
| | | | US | 2004126577 | A1 | 01-07-2004 |
| US 4880469 | A | 14-11-1989 | DE | 3865130 | D1 | 31-10-1991 |
| | | | EP | 0299824 | A1 | 18-01-1989 |
| | | | FR | 2617511 | A1 | 06-01-1989 |
| EP 1493850 | A | 05-01-2005 | CN | 1576416 | A | 09-02-2005 |
| | | | JP | 2005023508 | A | 27-01-2005 |
| | | | US | 2005066646 | A1 | 31-03-2005 |
| EP 1493752 | A | 05-01-2005 | AU | 2003273105 | A1 | 13-01-2005 |
| | | | JP | 2005530916 | T | 13-10-2005 |
| | | | WO | 2005000945 | A1 | 06-01-2005 |
| | | | US | 2005160939 | A1 | 28-07-2005 |